# EUROPEAN PATENT APPLICATION

(11) **EP 4 641 528 A1**
(43) Date of publication of application: **29.10.2025**
(21) Application number: 25162071.2
(22) Date of filing: 06.03.2025
(51) Int. Cl.: G06V 40/20, G06V 10/40, G06V 10/82, G06V 20/40, G06V 20/64

(54) **DATA PROCESSING APPARATUS AND METHOD**

(30) Priority: 24.04.2024 GB 202405776
(71) Applicant: Sony Group Corporation, Tokyo 108-0075 (JP); Sony Europe B.V., Weybridge, Surrey KT13 0XW (GB)
(72) Inventor: RYCHLIK, Thomas, Basingstoke, RG22 4SB (GB); BAUMBERG, Adam, Basingstoke, RG22 4SB (GB); NORTH, Maria, Basingstoke, RG22 4SB (GB); BROOME, Michael, Basingstoke, RG22 4SB (GB)
(74) Representative: D Young & Co LLP

(57) **Abstract**

A data processing apparatus comprising circuitry configured to: receive an image of a sports player during a sports event occurring in a sports environment; determine, using the image, a pose of a foot of the sports player in a spatial model representing the sports environment; fit a shoe model to the pose of the foot of the sports player in the spatial model; determine if the shoe model in the spatial model violates a rule of the sports event indicating a region of the sports environment within which a shoe worn by the foot of the sports player can be legally positioned; and generate an output indicating if the shoe model has violated the rule.

## Description

### BACKGROUND

### Field of the Disclosure

The present disclosure relates to a data processing apparatus and method.

### Description of the Related Art

The "background" description provided is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present disclosure.

There are several ways for a foot fault to occur in a game of tennis. A foot fault is committed by the player who serves the ball if, during the serve (that is, after the ball has been tossed but before the ball has been struck with the player's tennis racket), the player changes position by running or walking, touches the baseline or the court with either foot or touches an area outside an imaginary extension of the sideline or centre mark with either foot.

Currently, the determination of whether or not a foot fault has occurred is carried out manually by a human official. For example, the human official may watch the serving player directly or in captured video images of the player. However, this is labour intensive and subject to human error. There is therefore a desire to alleviate this.

### SUMMARY

The present disclosure is defined by the claims.

### BRIEF DESCRIPTION OF THE DRAWINGS

Non-limiting embodiments and advantages of the present disclosure are explained with reference to the following detailed description taken in conjunction with the accompanying drawings, wherein:
Fig. 1 schematically shows an example data processing apparatus;
Figs. 2A and 2B schematically show lines of a tennis court;
Figs. 3A to 3C schematically show example of legal and illegal positions of a serving players foot during a serve;
Fig. 4 schematically shows an example of a shoe model;
Figs. 5A and 5B schematically show an example way of determining ground contact of the shoe model;
Figs. 6A and 6B schematically show determination of legal and illegal foot positions;
Figs. 7A to 7C schematically show determination of a start of a serve, a foot position associated with no foot fault and a foot position associated with a foot fault;
Fig. 8 shows a first example method;
Fig. 9 schematically shows an example of inputs, processing and an output; and
Fig. 10 shows a second example method.

Like reference numerals designate identical or corresponding parts throughout the drawings.

### DETAILED DESCRIPTION OF THE EMBODIMENTS

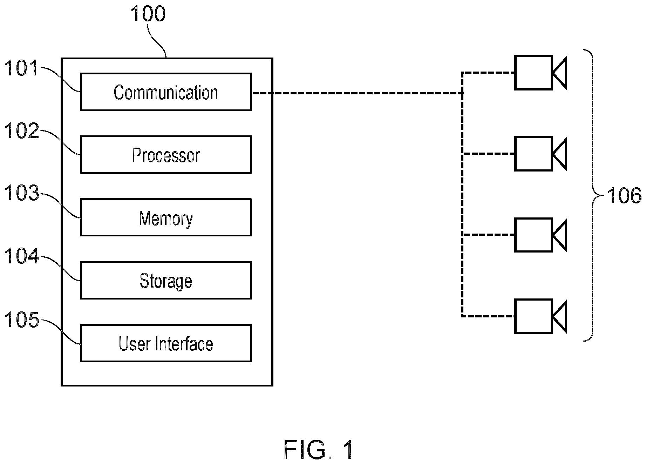

Fig. 1 shows an example data processing apparatus 100. The data processing apparatus 100 comprises a communication interface 101 for sending information to and/or receiving information from one or more other apparatuses, a processor 102 for executing electronic instructions, a memory 103 (e.g. volatile memory) for storing the electronic instructions to be executed and electronic input and output information associated with the electronic instructions, a storage medium 104 (e.g. non-volatile memory) for long term (persistent) storage of information and a user interface 105 (e.g. a touch screen, a non-touch screen, buttons, a keyboard and/or a mouse) for receiving commands from and/or outputting information to a user. Each of the communication interface 101, processor 102, memory 103, storage medium 104 and user interface 105 are implemented using appropriate circuitry, for example. The processor 102 controls the operation of each of the communication interface 101, memory 103, storage medium 104 and user interface 105.

In this example, one or more cameras 106 (which may be referred to simply as "cameras", even though there may only be one such camera) are configured to communicate with the data processing apparatus 100 via the communication interface 101 (e.g. via a wired and/or wireless connection).

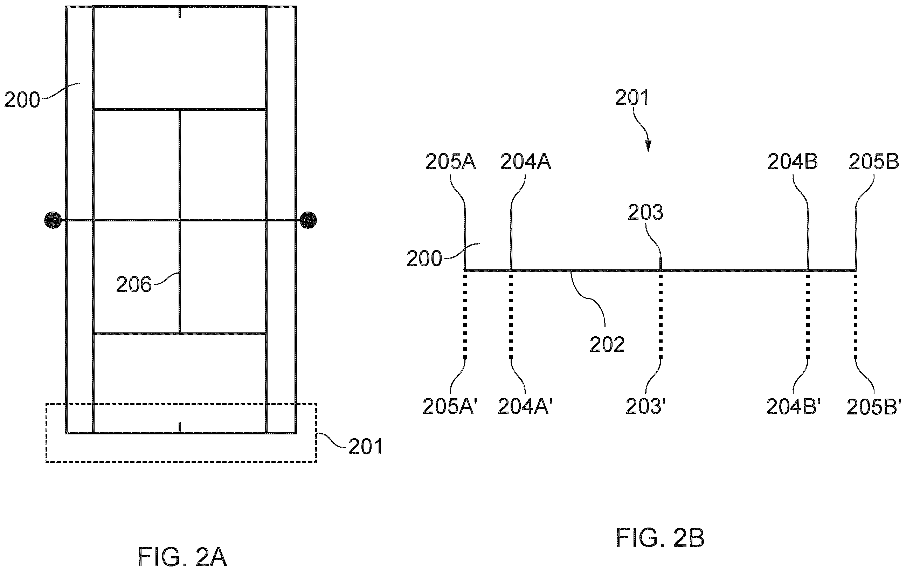

The cameras 106 are positioned to capture images (in particular, video images) of a serving player on a tennis court during a game of tennis. In particular, they are configured to capture images of a serving region 201 of a tennis court 200, as exemplified in Fig. 2A (the cameras 106 are not shown in Fig. 2A). The serving region 201 is a portion of the tennis court 200 within which a serving player is expected to be located when performing a serve. A serve is when one player tosses the ball in the air with one hand and strikes the ball with their tennis racket to begin a period of play.

There are a number of rules which the serving player must adhere to when performing the serve. One set of such rules relates to a foot fault. A serving player must not commit a foot fault in order for the serve to be allowable. A foot fault is committed by the player who serves the ball if, during the serve (that is, after the ball has been tossed but before the ball has been struck with the player's racket), (1) the player changes position by running or walking, (2) touches the baseline or the court with either foot or (3) touches an area outside an imaginary extension of the sidelines or centre mark (or net centre line 206) with either foot.

Each of (1), (2) and (3) thus represent a rule which, if violated by a foot of the player, means a foot fault has occurred. In particular, rules (2) and (3) indicate regions where, during a serve, a shoe worn by a foot of the serving player can be legally positioned or, conversely, regions (such as the baseline and outside the imaginary extensions of the sidelines and centre marks) where positioning of the shoe is legally prohibited. It is noted that, in the context of the present disclosure, the term "legal" means "adhering to the rule(s) of the sport or game" whereas "illegal" means "not adhering to the rule(s) of the sport or game".

Fig. 2B shows an enlarged version of the portion 201 of the tennis court. Fig. 2B shows the baseline 202, two pairs of sidelines (204A and 204B for singles tennis and 205A and 205B for doubles tennis) and the centre mark 203. Fig. 2B also shows an imaginary extension 203' of the centre mark 203 and imaginary extensions 204A', 204B', 205A' and 205B' of the sidelines 204A, 204B, 205A and 205B. Thus, while lines 202, 204A, 204B, 205A and 205B and centre mark 203 are marked on the tennis court (e.g. in paint or chalk), lines 203', 204A', 204B', 205A' and 205B' are not.

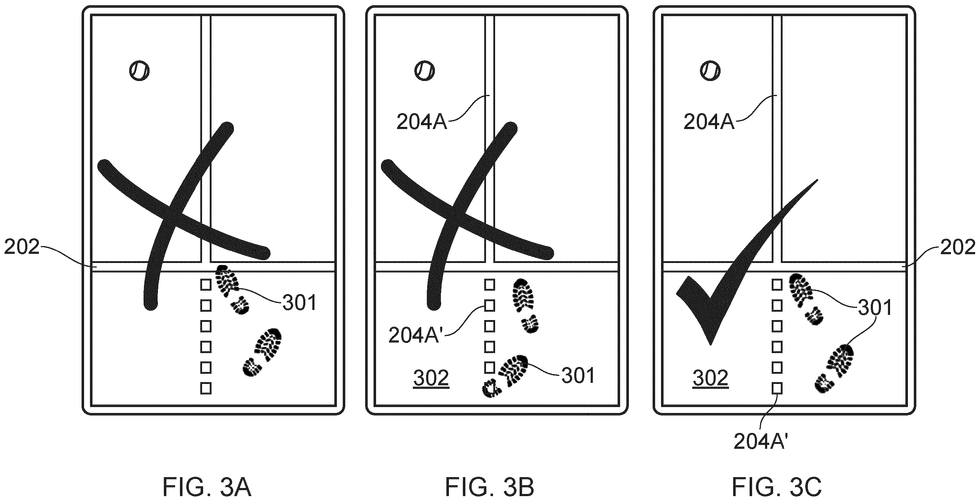

Figs. 3A-3C give examples of when a foot fault occurs or does not occur. In Fig. 3A, a foot fault occurs because one foot 301 of the serving player touches the baseline 202. In Fig. 3B, a foot fault occurs because one foot 301 of the serving player touches an area 302 outside the imaginary extension 204A' of the sideline 204A. In Fig. 3C, no foot fault occurs because neither of the serving player's feet 301 touch the baseline 202 nor touch the area outside the imaginary extension 204A' of the sideline 204A. The baseline 202 and line extensions 203', 204A', 204B', 205A' and 205B' thus define serving boundaries within which the serving player's feet must remain during the serve.

Existing techniques of determining a foot fault rely on a human official watching the serving player (either directly or in captured video images of the player). However, this is labour intensive and subject to human error. The present technology addresses this by automating the foot fault detection process.

To do this, a model of the shoes of the serving player is required. This is generated using skeletal data of the serving player. In particular, inverse kinematics skeletal data may be used. This involves the data processing apparatus 100 determining the pose of the player in each of successive video frames captured by the cameras 106 during the serve. The pose of the player is defined by the position in a modelled three-dimensional (3D) space of the tennis court of each of a plurality of joints of the player. The positions of these joints are tracked from frame to frame and interpolated over the frames. Inverse kinematics is then used to determine the motion of those joints in the modelled 3D space during the serve. The skeletal data represents this motion. The skeletal data thus defines, for example, the position of each joint of the serving player in the modelled 3D space at each of a plurality of times during the serve. Various methods for determining skeletal data of humans from successively captured video frames (such as those provided by Hawk-Eye Innovations ^{®}) are known and thus not discussed in detail here.

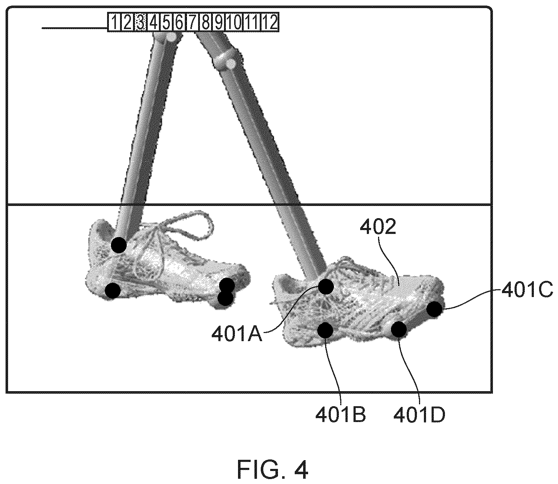

Once the skeletal data of the serving player during the serve has been obtained, the positions of the shoes of the player in the modelled 3D space can be determined by the data processing apparatus 100. An example of this is shown in Fig. 4.

In this example, a pre-generated 3D model of a shoe 402 is fitted to the tracked ankle joint 401A, heal joint 401B, big toe joint 401C and little toe joint 401D of each foot the serving player (with a left foot version of the 3D shoe model being fitted to the left foot of the player skeleton and a right foot version of the 3D shoe model being fitted to the right foot of the player skeleton). The joints 401A, 401B, 401C and 401D thus define a pose of the player's foot.

The fitting occurs by appropriate scaling, translating and rotating of the shoe model 402. For example, the scaling of the shoe may be proportional to the length between the big toe and heal joints. The translation of the shoe may be such that the centre-of-mass (CoM) of the shoe model aligns with an average (in particular, a weighted average, if necessary) position of the ankle, heal, bit toe and small toe joints. The rotation of the shoe may be such that a plane defining the bottom of the shoe model is aligned with a plane defined by the heal, big toe and little toe joints and such that centred with respect to the shoe model and extending longitudinally from the rear of the shoe model to the front of the shoe model aligns with a line extending from the heal joint to a mid-point between the big toe and little toe joints.

This is only one example of fitting a shoe model to the player skeleton and other techniques for fitting a shoe model could be used. For example, a mesh incorporating a shoe may be applied directly to the player skeleton (using any appropriate known pose mesh generation technique, for example).

Once the current position of a shoe of the serving player in the modelled 3D space of the tennis court has been determined, the next step is to determine whether any part of the shoe is (or, at least, is likely to be) in contact with the ground (that is, the surface of the tennis court itself). This is a prerequisite for determining whether a foot fault has occurred due to the foot illegally coming into contact with, for example, the baseline 202 or area 302. If the foot is not in contact with the ground, there can be no contact and thus no foot fault for these reasons.

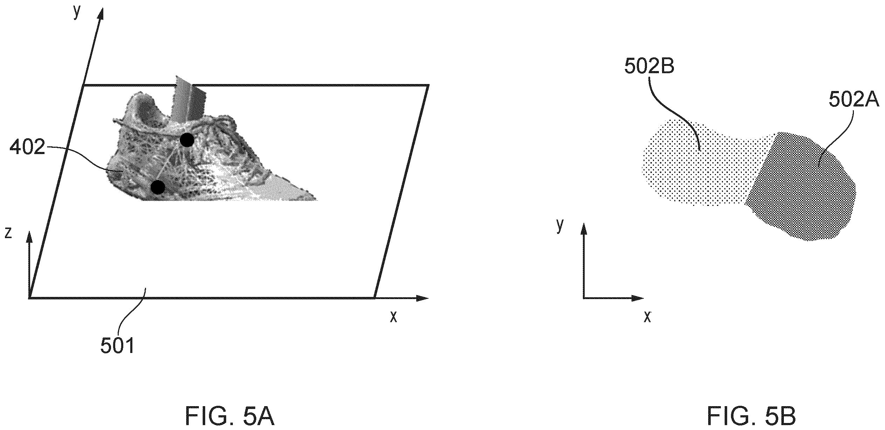

To achieve this, as shown in Fig. 5A, a surface 501 is defined a predetermined distance (e.g. a distance representing 1 or 2 centimetres, cm) above the surface of the tennis court (not shown in Fig. 5A) in the modelled 3D space. Here, the width and length of the tennis court are defined in the x and y directions and the height above the tennis court is defined in the z direction. The surface of the tennis court and surface 501 are thus separated by the predetermined distance in the z direction.

Any point of the shoe model 402 (e.g. any vertex of the mesh defining the shoe model 402) which is below the surface 501 is recorded as such. Thus, each point of the shoe model below the surface 501 is recorded as "below" (or with a bit 1, for example) whereas any point of the shoe model at or above the surface is recorded as "above" (or with a bit 0, for example). The points marked "below" are then projected onto the x and y plane (that is, only the x and y coordinates are taken and the z coordinates are ignored) and the convex hull of these is taken to form a footprint portion 502A, as shown in Fig. 5B. Here, the points marked "above" are also projected onto the x and y plane and the convex hull taken to form a footprint portion 502B (shown in a different shade). In this way, the position of each point of the shoe model 402 relative to the surface of the tennis court is considered.

The footprint portion 502A thus represents a portion of the shoe in contact with the ground. The position of the footprint portion 502A with respect to portions of the court for which contact is not allowed during a serve thus needs to be checked for a foot fault. On the other hand, footprint portion 502B represents a portion of the shoe not in contact with the ground. The position of the footprint portion 502B with respect to portions of the court for which contact is not allowed during a serve thus does not need to be checked for a foot fault. In an example, since it is only the position of the footprint portion 502A which needs to be checked for a foot fault, only the footprint portion 502A is determined (by projecting only the points of the shoe model 402 below the surface 501). This alleviates the processing required in projecting points corresponding to the footprint portion 502B.

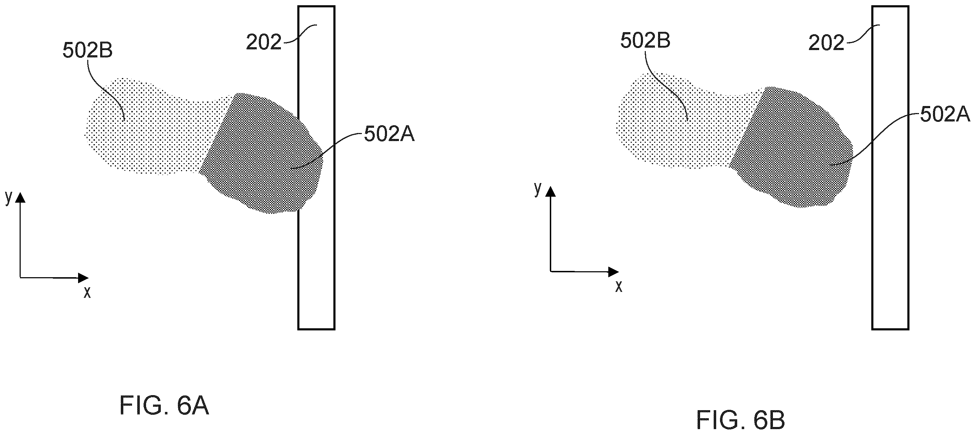

This is exemplified in Figs. 6A and 6B.

In Fig. 6A, the footprint portion 502A representing the portion of the shoe in contact with the ground overlaps the baseline 202 in the modelled 3D space of the tennis court. It is thus determined that the player's shoe is in contact with the baseline 202 and a foot fault has therefore occurred.

On the other hand, in Fig. 6B, the footprint portion 502A representing the portion of the shoe in contact with the ground does not overlap the baseline 202 in the modelled 3D space of the tennis court. It is thus determined that the player's shoe is not in contact with the baseline 202 and a foot fault has therefore not occurred.

The modelled 3D space of the tennis court is generated in advance using, for example, one or more images of the tennis court captured by the one or more cameras 106 and a suitable feature detection algorithm for detecting the lines (including baseline 202, centre mark 203 and sidelines 204A, 204B, 205A and 205B) of the tennis court. Once the lines have been detected, the imaginary extensions of the lines (e.g. line extensions 203', 204A', 204B', 205A' and 205B') are also added to the 3D model.

Various techniques for generating a model of a 3D space from images of that 3D space captured by cameras in predetermined positions with respect to the 3D space and with predetermined camera parameters are known (such as those already implemented by Hawk-Eye Innovations ^{®}) and are therefore not discussed here. The result, however, is that, once the model has been generated, the position of a point (e.g. a joint of a tennis player) in subsequently captured image(s) of the 3D space can be mapped to a corresponding position in the model of the 3D space.

With the present technology, this allows the position of the ankle joint 401A, heal joint 401B, big toe joint 401C and little toe joint 401D in the 3D model of the tennis court to be determined and thus the position of the shoe model 402 in the 3D model of the tennis court to be determined. The position of the portion of shoe model 402 in contact with the ground can then be compared with the position of the relevant features of the tennis court in the 3D model (e.g. the baseline 202 in Figs. 6A and 6B) in the way described.

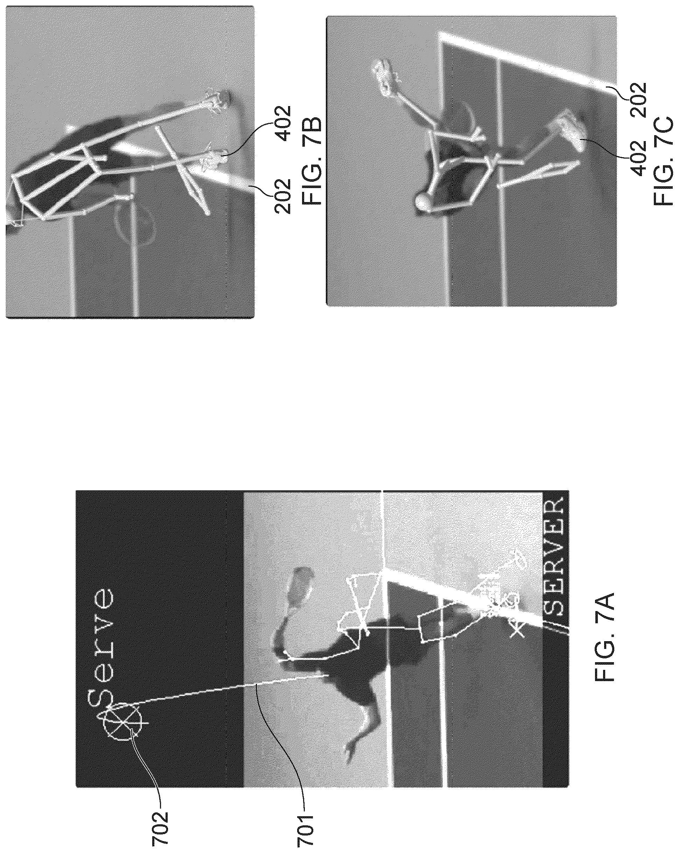

Figs. 7A to 7C show an example in which foot fault detection of serving player is carried out according to the present technology.

Fig. 7A shows the detection of the start of the serve. The serve starts at a first event in which the player tosses the ball in the air (. There are a number of ways in which this could be detected. In this example, a trajectory 701 of the ball 702 (which, together with the pose of the serving player, is also detected in each frame captured by the cameras 106 to determine its position (e.g. CoM position) in the 3D model) is considered. In general, the toss of a tennis ball involves the tennis ball being thrown (or "tossed") in a substantially vertical direction so that, as the ball then balls under gravity, the player is able to strike it with their racket). The start of a serve may therefore be detected as the point in time at which motion of the ball 702 along the substantially vertical trajectory 701 begins.

In an example, a trajectory may be determined as substantially vertical if the angle of projection of the ball with respect to the x-y plane of the 3D model is greater than a predetermined angle (e.g. greater than 75°, 80° or 85°). To distinguish from other vertical trajectories which are not part of a serve (e.g. the serving player bouncing the ball before the serve starts) a substantially vertical trajectory 701 may only be determined to indicate the start of a serve if the ball travels more than a predetermined vertical distance (e.g. a distance corresponding to more than 1, 1.25 or 1.5 metres).

The serve then ends at a second event in which the player strikes the ball with their racket. Again, there are a number of ways in which this could be detected. For example, the it may be determined that the ball has been struck when a detected magnitude of acceleration of the ball is greater than a predetermined acceleration value (e.g. greater than 50 ms⁻²).

During the time between the detection of the start of the serve (occurring at a first time) and the detection of the end of the serve (occurring at a second time), the data processing apparatus 100 monitors the position of each shoe of the player in the way described. If, during the serve, the shoe is determined to touch one of the illegal areas of the court, a foot fault is detected. Otherwise, a foot fault is not detected. Fig. 7B shows an example in which there is a foot fault is not detected (since the position of the shoe model 402 is determined to be outside the area of the tennis court 200 and baseline 202). Fig. 7C, on the other hand, shows an example in which a foot fault is detected (since the position of the shoe model 402 is determined to be inside the area of the tennis court 200).

It will be appreciated that determining the start and end of a serve requires analysis of a plurality of successive frames. For example, it cannot be determined that the ball is travelling in a substantially vertical trajectory 701 (thereby indicating the toss and thus the start of the serve) until the ball is captured in a frame subsequent to the start of the vertical trajectory 701. Similarly, it cannot be determined that the ball is accelerating at more than a predetermined acceleration value (thereby indicating the ball has been struck and thus the end of the serve) until the ball is captured in a frame subsequent to the start of that acceleration. The data processing apparatus 100 is thus configured to store the shoe position data (e.g. the position of each vertex of the shoe model mesh in the 3D model) for a predetermined period of time after capture (e.g. 5 or 10 seconds) so that, once the start and end times of a serve have been determined, the shoe position data between those times can be used to determine whether or not a foot fault has occurred.

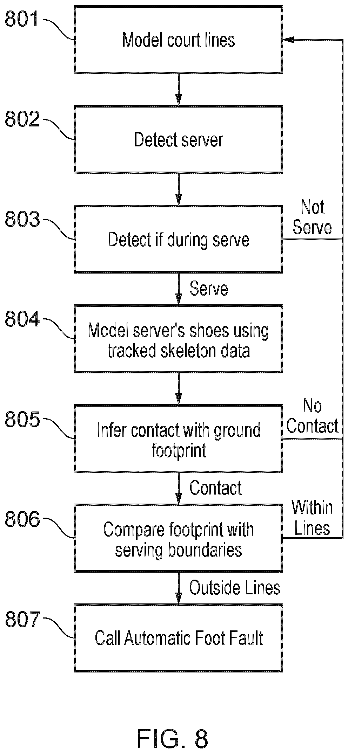

Fig. 8 shows an example method of the present technology. The method is executed by the processor 102 of the data processing apparatus 100, for example.

At step 801, the court lines (including baselines 202, sidelines 204A, 204B, 205A, 205C, centre mark 203 and line extensions 203', 204A', 204B', 205A' and 205B') are included in the 3D model of the court.

At step 802, the serving player is detected. For example, the player with a detected position (e.g. CoM position) closest to that of the position of the ball may be determined as the server. Determining the serving player means the subsequent processing is only performed for the serving player, thereby alleviating the processing burden.

At step 803, it is determined whether a serve is occurring (e.g. whether or not the ball has been tossed in a substantially vertical direction). If a serve is not determined to occur, the method returns to step 801. Otherwise, it proceeds to step 804.

At step 804, shoe models 402 of the servers shoes are generated from the tracked skeletal data of the server.

At step 805, it is determined whether any portion of either of the shoe models 402 is in contact with the ground. If there is no ground contact, the method returns to step 801. Otherwise, it proceeds to step 806.

At step 806, it is determined whether the portion of the shoe model 402 in contact with the ground is within the serving boundaries defined by the court lines. If the serving boundaries are adhered to the method returns to step 801. Otherwise, it proceeds to step 807.

At step 807, a foot fault is detected and an output is generated indicating this. For example, the user interface 105 may be controlled to generate a visual and/or audio output indicating a foot fault has been detected. Alternatively, or in addition, a signal indicative of the detection of the foot fault may be communicated via communication interface 101 to another device. The output generated at step 807 may be a simple binary value (e.g. 0 for no detected foot fault and 1 for no detected foot fault). Additional data such as a timestamp at which the foot fault is detected to have occurred may also be generated.

Optionally, the shoe model position data 402 obtained during the serve may be used to generate appropriate graphics to demonstrate the occurrence (or not) of a foot fault. For instance, user interface 105 may be controlled to output graphics depicting the information of Fig. 6A (for a detected foot fault) or Fig. 6B (for no detected foot fault). This many help human match officials, the players and/or the audience (watching in-person or via a broadcast, for example) to better understand the reason for the foot fault decision. In an example, data representing the generated graphics and/or the shoe model position data itself may be transmitted to another device (e.g. a broadcasting device) via the communication interface 101.

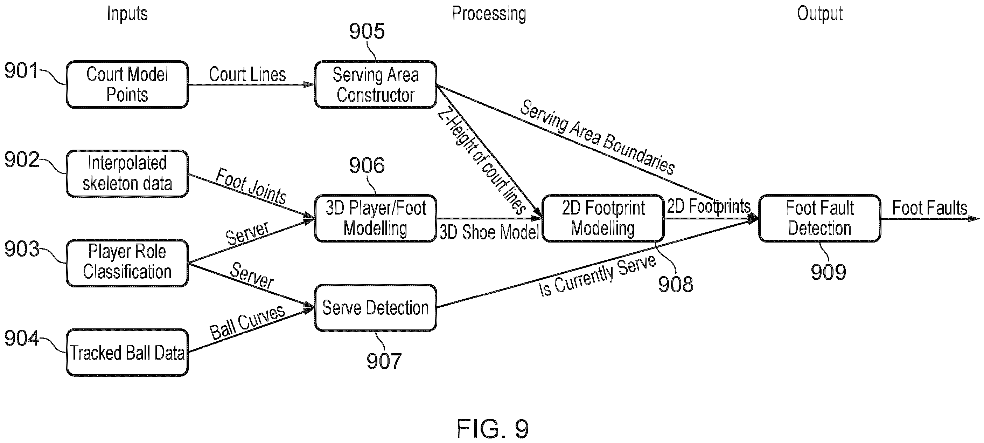

Fig. 9 shows example inputs, processing and outputs of the present technology. The processing is executed on the inputs by the processor 102 to generated the outputs, for example.

The inputs include court model points 901, interpolated skeleton data 902, player role classification 903 and tracked ball data 904.

The court model points 901 are points defining the surface of the tennis court in the 3D model. These include points defining the court lines of the tennis court (including the baselines 202, sidelines 204A, 204B, 205A and 205B and centre marks 203). Lines on the tennis court are detectable by any suitable known object detection algorithm (e.g. a suitable edge detection algorithm) in images captured by the cameras 106. Each point is represented by 3D coordinates (that is, an x, y and z coordinate). Additional information provided for each point indicates whether or not it appears on a line of the tennis court. For example, a point appearing on a line of the tennis court may be associated with an additional bit 1 whereas a point not appearing on a line of the tennis court may be associated with an additional bit 0.

The interpolated skeleton data 902 represents the tracked joints of the players (that is, the position of each joint at each of a plurality of successive times). These are interpolated over a history of frames captured over immediately preceding predetermined time period (e.g. the immediately preceding 5 or 10 seconds).

The player role classification 903 identifies which is the serving player (e.g. the player currently positioned closest to the ball). Each detected player pose is associated with an identifier and each identifier is classified as a server or non-server (e.g. with a 1 or 0) at a given point in time.

The tracked ball data 904 represents the tracked ball (that is, the position of the ball at each of a plurality of successive times). This takes the form of one or more piecewise curves each indicating the trajectory of the ball as it is projected (either by a racket during play or by a toss during a serve). In the above examples, a ball curve indicating a substantially vertical trajectory is indicative of a toss at the start of a serve.

The processing includes a serving area constructor 905, 3D player / foot modelling 906, serve detection 907, 2D footprint modelling 908 and foot fault detection 909.

The serving area constructor 905 extracts each baseline 202 (one at each end of the tennis court), the sidelines 204A, 204B, 205A and 205B and each centre mark 203 (again, one at each end of the tennis court) from the court model points 901 and uses these to determine the serving boundaries. The sidelines and centre marks are extended to generate the extended lines 203', 204A', 204B', 205A' and 205B'. The thickness of each extended line is, for example, fixed at the width of the line from which it is extended at the point of extension. The direction of each extended line is that of a line of best fit of the points defining the line which is extended. In an example, the extrapolation of the centre marks 203 may also use points of the net centre lines 206 (also extracted by service area constructor 905) to more accurately determine the direction of the extended lines 203'. Alternatively, the net centre lines 206 may be used instead of the centre marks 203 to generate the extended lines 203'.

The 3D player / foot modelling 906 uses the interpolated skeleton data 902 to fit the 3D shoe model 402 to the ankle, heal, big toe and little toe joints of the serving player (server) in the way described. A point cloud representing the server (in particular, representing the vertices of the mesh of the shoe model on each foot of the server) is therefore generated.

The serve detection 907 uses the tracked ball data 904 to determine whether the serving player has tossed the ball (thereby indicating the start of the serve) and struck the ball (thereby indicating the end of the serve).

The 2D footprint modelling 908 uses the z-height of the court and the current position of the 3D shoe model to determine whether any portion of the server's shoe is in contact with the ground. For instance, if the surface 501 is a predetermined distance s above the court (with s corresponding to 1 or 2 cm, for example) and the z-height of the surface of the court is h (with h being variable over the x-y plane, since no court is truly flat and this is taken into account when the 3D model of the court is generated), then any vertex of the 3D shoe model with a z-height less than h + s is considered to be in contact with the ground. Such points define the footprint portion 502A in Figs. 6A and 6B, for example.

The foot fault detection 909 outputs a signal indicating a foot fault has occurred if, during a serve (as detected during serve detection 907), a portion of the 2D footprint determined by the 2D footprint modelling 908 to be in contact with the ground falls outside a serving area boundary (as defined with respect to the lines extracted by the serving area constructor 905). The serving area boundary is defined by the baseline 202 and relevant ones of the extended lines 203', 204A', 204B', 205A' and 205B'. The serving player's shoe is outside the serving area boundary if it touches the baseline or touches an area outside the relevant ones of the extended lines 203', 204A', 204B', 205A' and 205B' (e.g. as exemplified in Figs. 3A and 3B).

The processing of steps 906, 907, 908 and 909 is carried out only on the serving player identified by the output of the player role classification 903, thereby alleviating the processing burden on the processor 102.

The present technology thus provides a way of automating foot fault detection in tennis, thereby reducing human error and the need for human officials to constantly manually monitor the position of the serving player's feet throughout a tennis match. Furthermore, the data processing apparatus 100 of the present technology can be implemented with existing cameras 106 already present on professional tennis courts (e.g. for 3D court mapping and ball tracking to determine whether or not a ball is in or out of play), thereby reducing the need for additional equipment to be installed in the vicinity of the tennis court.

The accuracy of interpolated skeleton data (such as interpolated skeletal data 902) is generally high and thus using it together with an appropriately fitted 3D shoe model 402 allows the foot position of the serving player with respect to the serving boundaries to be determined to a sufficient level of accuracy. Sufficient accuracy may be obtained even if the same base 3D shoe model 402 is used for all players. However, to further improve accuracy, in an example, the 3D shoe model 402 (fitted to the joints 401A, 401B, 401C and 401D in the way previously described) may be adjusted over time so that it better matches the actual shoes worn by a particular player.

In an example, an image of an actual shoe being worn by the serving player may be captured by one of the cameras 106. A mask of the 3D shoe model 402 fitted to the player skeleton data may then be projected onto the captured image (using the known extrinsic and intrinsic parameters of the camera 106, for example). The mask of the 3D shoe model may then be adjusted so its corresponding projected mask better fits the image of the actual shoe. For example, the dimensions (length, width and/or depth) of the 3D shoe model may be adjusted and/or a style of the 3D shoe model may be changed (e.g. selected from one of a plurality of different styles). This may be repeated over several different images of the actual shoe captured by the cameras 106 to gradually increase the likeness of the 3D shoe model and the actual shoe.

In an example, a suitably trained machine learning (ML) model (e.g. executed by the processor 102) may be trained to segment and classify tennis shoes in an image. The dimensions of the 3D shoe model may then be adjusted to minimise a cost function representing a difference in shape between the projected mask of the 3D shoe model and the image segment containing the actual shoe captured by the cameras 106. For example, the cost function may be a difference in area of the projected mask and the image segment.

The ML model may also be configured to classify segmented shoes in the image as one of a plurality of predetermined shoe types. There may then be a corresponding plurality of base 3D shoe models respectively corresponding to each predetermined shoe type. During adjustment of the 3D shoe model, the relevant base 3D shoe model is first selected according to the classification of the actual shoe in the image and fitted to the skeleton data of the player. The dimensions of the selected 3D shoe model are then adjusted over time to minimise the projected mask cost function. This helps further improve the accuracy of the present technology, since the 3D shoe model will more closely match the actual shoes worn by the player.

In the above examples, any suitable known image segmentation model (e.g. edge detection, Mask R-CNN, clustering segmentation and/or region-based segmentation) may be used together with any suitable known image classification model (e.g. a convolutional neural network). Improved results may be obtained by training the models using a set of images specifically containing tennis shoes. For example, 10,000 different images of tennis shoes of between 5 and 10 different labelled classifications may be used. 8,000 of these may be used in the training set and 2,000 used in the test set. The tennis shoes may be classified by, for example, brand, court type, speed vs stability types or any combination of these.

The 3D shoe model may also be improved by, for example, applying different deformation properties to different parts of the shoe model (e.g. so the end containing the toes of the player deforms more than the end containing the heal of the player for a given amount of force) and/or by providing a greater number of foot joints in the interpolated skeletal data to which the 3D shoe model must be fitted.

To help alleviate the occurrence of false positives (that is, a foot fault being called when there was actually no foot fault) or false negatives (that is, no foot fault being called when there actually was a foot fault), further features can be implemented with the present technology.

In one example, one or more predetermined values representing a minimum confidence required for a foot fault to be positively may be set. For instance, there may be a minimum extent (distance) of violation (e.g. the portion of the shoe determined to be in contact with the ground must be at least a predetermined distance outside the serving boundary, e.g. at least 4, 5 or 6 millimetres), a minimum size of the portion of the shoe in contact with the ground (e.g. defined as a proportion of the whole shoe, e.g. at least 10, 15 or 20% of the projection of the whole shoe on the x-y plane) and/or minimum time period or number of successive frames (e.g. at least 5, 10 or 20 successive frames at 30 frames per second) for which the violation is continuously detected.

Only if such predetermined threshold value(s) are satisfied is a positive foot fault detection recorded. If the threshold(s) are not satisfied but a foot fault is nonetheless detected, the output can either be that no foot fault was detected or that the result is inconclusive (thereby allowing a human match official to review the captured images manually). In the latter case, there are thus three potential outcomes of the foot fault detection, these being "fault" (i.e. foot fault detected and the predetermined threshold value(s) are satisfied), "inconclusive" (i.e. foot fault detected but at least one of the predetermined threshold value(s) are not satisfied and "no fault" (i.e. no foot fault detected - the shoe was recorded being within the serving boundaries at all times during the serve). The predetermined threshold value(s) may be determined by the appropriate governing body of a particular tennis match (and may be adjustable via the user interface 105, for example).

Alternatively, or in addition, further information may be used to help distinguish detection of a genuine foot fault from a false positive. For example, it is often the case that a serving tennis player will jump while pointing their toes forward during the serve. In this case, the toes may be off the ground but only by a very small amount. This may lead to a false positive if the toes overlap a region outside the serving boundaries (e.g. the baseline 202) and, according to the 3D shoe model 402 fitted to the serving player's interpolated skeleton data, fall below the surface 501 (which, as explained, is slightly above the actual surface of the tennis court).

In this case, the direction of a change in position of the CoM of the 3D shoe model may be determined. If it is determined that, at the point of the positive determination of the player's toes touching the court outside the serving boundaries, the CoM of the shoe was travelling in a positive z direction (that is, upwards), it is determined that no foot fault is likely to have occurred (and the output is "no fault"). In an example, frame(s) in which the CoM of the shoe is moving upwards are disregarded when determining whether or not a foot fault has occurred. On the other hand, if it is determined that the CoM of the shoe was stationary or travelling in a negative z direction (that is, downwards), the determination of whether or not a foot fault occurred occurs in the way(s) previously described. The detection of the CoM of the 3D shoe model 402 travelling upwards thus overrides any detection of a foot fault, in this particular example, to help further improve the accuracy of foot fault detection 909.

Although the present technology has been exemplified using tennis, it will be appreciated that the same technique(s) may be applied to any sport in which the position of a sports player's foot with respect to a defined boundary needs to be determined. For example, the present technique may be applied to cricket to determine the position of a player's foot with respect to the crease(s) of the cricket pitch or to rugby to determine whether a player's foot has made contact with a touchline of the rugby pitch. Thus, more generally, the present technology is applicable to a number of sports events (for example, tennis, cricket or rugby) occurring in a number of respective sports environments (for example, a tennis court, cricket pitch or rugby pitch). In each case, the modelled 3D space is a spatial model representing the relevant sports environment.

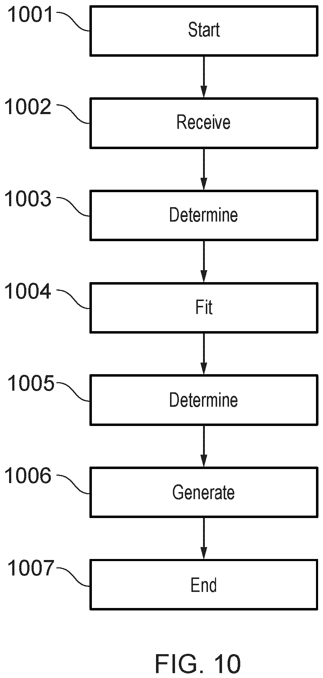

Fig. 10 shows an example method of the present technology. The method is executed by the processor 102 of the data processing apparatus 100, for example.

The method starts at step 1011.

At step 1002, an image of a sports player during a sports event occurring in a sports environment is received.

At step 1003, using the image, a pose of a foot of the sports player in a spatial model representing the sports environment is determined.

At step 1004, a shoe model is fitted to the pose of the foot of the sports player in the spatial model.

At step 1005, it is determined if the shoe model in the spatial model violates a rule of the sports event indicating a region of the sports environment within which a shoe worn by the foot of the sports player can be legally positioned.

At step 1006, an output indicating if the shoe model has violated the rule is generated.

The method ends at step 1007.

Example(s) of the present disclosure are defined by the following numbered clauses:
1. A data processing apparatus comprising circuitry configured to:
   receive an image of a sports player during a sports event occurring in a sports environment;
   determine, using the image, a pose of a foot of the sports player in a spatial model representing the sports environment;
   fit a shoe model to the pose of the foot of the sports player in the spatial model;
   determine if the shoe model in the spatial model violates a rule of the sports event indicating a region of the sports environment within which a shoe worn by the foot of the sports player can be legally positioned; and
   generate an output indicating if the shoe model has violated the rule.
2. A data processing apparatus according to clause 1, wherein:
   the rule of the sports event indicates a boundary of a surface of the sports environment outside which contact with the shoe of the sports player is prohibited; and
   the circuitry is configured to:
      determine that a portion of the shoe model is positioned at a position relative to a surface of the spatial model indicating contact of a corresponding portion of the shoe of the sports player with the surface of the sports environment;
      generate an output indicating the rule has been violated if the indicated contact of the portion of the shoe of the sports player occurs outside the boundary of the surface of the sports environment.
3. A data processing apparatus according to clause 2, wherein contact of the portion of the shoe of the sports player with the surface of the sports environment is indicated when the corresponding portion of the shoe model is within a predetermined distance of the surface of the spatial model.
4. A data processing apparatus according to clause 2 or 3, wherein determining if the indicated contact of the portion of the shoe of the sports player occurs outside the boundary of the surface of the sports environment comprises determining if a two-dimensional projection of the portion of the shoe model overlaps a two-dimensional projection of a region of the surface of the spatial model corresponding to a region outside the boundary of the surface of the sports environment.
5. A data processing apparatus according to any one of clauses 2 to 4, wherein the output indicates the shoe model has violated the rule if one or more predetermined thresholds associated with the indicated contact are satisfied.
6. A data processing apparatus according to clause 5, wherein the one or more predetermined thresholds comprise one or more of a minimum distance of violation of the boundary, a minimum size of the portion of the shoe of the sports player, a minimum time period of continuous indicated contact outside the boundary or a minimum number of successively captured images in which indicated contact outside the boundary is detected.
7. A data processing apparatus according to any preceding clause, wherein:
   the pose of the foot of the sports player comprises a position of an ankle joint, a heal joint, a big toe joint and a little toe joint of the sports player; and
   the shoe model is scaled, translated and rotated according to the positions of the ankle joint, heal joint, big toe joint and little toe joint of the sports player.
8. A data processing apparatus according to clause 7, wherein the circuitry is configured to:
   perform image segmentation on the image to generate an image segment of the shoe of the sports player;
   generate a mask of the shoe model in the image; and
   adjust one or more dimensions of the shoe model to minimise a cost function representing a difference in shape between the image segment and mask.
9. A data processing apparatus according to clause 7 or 8, wherein the circuitry is configured to:
   perform image classification on the image to determine the shoe of the sports player as one of a plurality of predetermined shoe types; and
   select the shoe model from a plurality of predetermined shoe models each of a respective one of the predetermined shoe types.
10. A data processing apparatus according to any preceding clause, wherein the sports event is a tennis match and the region of the sports environment within which a shoe worn by the foot of the sports player can be legally positioned is a serving region.
11. A data processing apparatus according to clause 10, wherein:
   the received image is one of one or more images of a plurality of tennis players; and
   the circuitry is configured to:
      determine a serving tennis player from among the plurality of tennis players as the sports player for whom a pose of a foot in the spatial model representing the sports environment is to be determined.
12. A data processing apparatus according to clause 11, wherein the circuitry is configured to:
   record a first time at which an event indicating a start of a serve occurs;
   record a second time at which an event indicating an end of a serve occurs;
   determine, between the first and second times, if the shoe model in the spatial model violates the rule of the sports event.
13. A computer-implemented data processing method comprising:
   receiving an image of a sports player during a sports event occurring in a sports environment;
   determining, using the image, a pose of a foot of the sports player in a spatial model representing the sports environment;
   fitting a shoe model to the pose of the foot of the sports player in the spatial model;
   determining if the shoe model in the spatial model violates a rule of the sports event indicating a region of the sports environment within which a shoe worn by the foot of the sports player can be legally positioned; and
   generating an output indicating if the shoe model has violated the rule.
14. A program for controlling a computer to perform a method according to clause 13.
15. A computer-readable storage medium storing a program according to clause 14.

Numerous modifications and variations of the present disclosure are possible in light of the above teachings. It is therefore to be understood that, within the scope of the claims, the disclosure may be practiced otherwise than as specifically described herein.

In so far as embodiments of the disclosure have been described as being implemented, at least in part, by one or more software-controlled information processing apparatuses, it will be appreciated that a machine-readable medium (in particular, a non-transitory machine-readable medium) carrying such software, such as an optical disk, a magnetic disk, semiconductor memory or the like, is also considered to represent an embodiment of the present disclosure. In particular, the present disclosure should be understood to include a non-transitory storage medium comprising code components which cause a computer to perform any of the disclosed method(s).

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more computer processors (e.g. data processors and/or digital signal processors). The elements and components of any embodiment may be physically, functionally and logically implemented in any suitable way. Indeed, the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to these embodiments. Additionally, although a feature may appear to be described in connection with particular embodiments, one skilled in the art would recognize that various features of the described embodiments may be combined in any manner suitable to implement the present disclosure.

## Claims

1. A data processing apparatus comprising circuitry configured to:
receive an image of a sports player during a sports event occurring in a sports environment;
determine, using the image, a pose of a foot of the sports player in a spatial model representing the sports environment;
fit a shoe model to the pose of the foot of the sports player in the spatial model;
determine if the shoe model in the spatial model violates a rule of the sports event indicating a region of the sports environment within which a shoe worn by the foot of the sports player can be legally positioned; and
generate an output indicating if the shoe model has violated the rule.

2. A data processing apparatus according to claim 1, wherein:
the rule of the sports event indicates a boundary of a surface of the sports environment outside which contact with the shoe of the sports player is prohibited; and
the circuitry is configured to:
determine that a portion of the shoe model is positioned at a position relative to a surface of the spatial model indicating contact of a corresponding portion of the shoe of the sports player with the surface of the sports environment;
generate an output indicating the rule has been violated if the indicated contact of the portion of the shoe of the sports player occurs outside the boundary of the surface of the sports environment.

3. A data processing apparatus according to claim 2, wherein contact of the portion of the shoe of the sports player with the surface of the sports environment is indicated when the corresponding portion of the shoe model is within a predetermined distance of the surface of the spatial model.

4. A data processing apparatus according to claim 2, wherein determining if the indicated contact of the portion of the shoe of the sports player occurs outside the boundary of the surface of the sports environment comprises determining if a two-dimensional projection of the portion of the shoe model overlaps a two-dimensional projection of a region of the surface of the spatial model corresponding to a region outside the boundary of the surface of the sports environment.

5. A data processing apparatus according to claim 2, wherein the output indicates the shoe model has violated the rule if one or more predetermined thresholds associated with the indicated contact are satisfied.

6. A data processing apparatus according to claim 5, wherein the one or more predetermined thresholds comprise one or more of a minimum distance of violation of the boundary, a minimum size of the portion of the shoe of the sports player, a minimum time period of continuous indicated contact outside the boundary or a minimum number of successively captured images in which indicated contact outside the boundary is detected.

7. A data processing apparatus according to claim 1, wherein:
the pose of the foot of the sports player comprises a position of an ankle joint, a heal joint, a big toe joint and a little toe joint of the sports player; and
the shoe model is scaled, translated and rotated according to the positions of the ankle joint, heal joint, big toe joint and little toe joint of the sports player.

8. A data processing apparatus according to claim 7, wherein the circuitry is configured to:
perform image segmentation on the image to generate an image segment of the shoe of the sports player;
generate a mask of the shoe model in the image; and
adjust one or more dimensions of the shoe model to minimise a cost function representing a difference in shape between the image segment and mask.

9. A data processing apparatus according to claim 7, wherein the circuitry is configured to:
perform image classification on the image to determine the shoe of the sports player as one of a plurality of predetermined shoe types; and
select the shoe model from a plurality of predetermined shoe models each of a respective one of the predetermined shoe types.

10. A data processing apparatus according to claim 1, wherein the sports event is a tennis match and the region of the sports environment within which a shoe worn by the foot of the sports player can be legally positioned is a serving region.

11. A data processing apparatus according to claim 10, wherein:
the received image is one of one or more images of a plurality of tennis players; and
the circuitry is configured to:
determine a serving tennis player from among the plurality of tennis players as the sports player for whom a pose of a foot in the spatial model representing the sports environment is to be determined.

12. A data processing apparatus according to claim 11, wherein the circuitry is configured to:
record a first time at which an event indicating a start of a serve occurs;
record a second time at which an event indicating an end of a serve occurs;
determine, between the first and second times, if the shoe model in the spatial model violates the rule of the sports event.

13. A computer-implemented data processing method comprising:
receiving an image of a sports player during a sports event occurring in a sports environment;
determining, using the image, a pose of a foot of the sports player in a spatial model representing the sports environment;
fitting a shoe model to the pose of the foot of the sports player in the spatial model;
determining if the shoe model in the spatial model violates a rule of the sports event indicating a region of the sports environment within which a shoe worn by the foot of the sports player can be legally positioned; and
generating an output indicating if the shoe model has violated the rule.

14. A program for controlling a computer to perform a method according to claim 13.

15. A computer-readable storage medium storing a program according to claim 14.
